# EUROPEAN PATENT SPECIFICATION

(11) **EP 0 468 627 B1**
(45) Date of publication and mention of the grant of the patent: **29.03.2000**
(21) Application number: 91305119.9
(22) Date of filing: 06.06.1991
(51) Int. Cl.: C03C 27/06, G10K 11/02

(54) **Method for bonding together hollow glass spheres**
Verfahren zum Verbinden von Hohlglaskugeln
Procédé pour coller ensemble des sphères creuses en verre

(30) Priority: 24.07.1990 GB 9016192
(43) Date of publication of application: 29.01.1992
(60) Divisional application: 98102258.5
(73) Proprietor: BG plc, Reading, Berkshire RG6 1PT (GB)
(72) Inventor: Gill, Michael John, Milford on Sea, Hampshire SO4 0TW (GB)
(74) Representative: Morgan, David James

(56) References cited:
- DE-A- 3 431 620
- DE-A- 3 622 780
- GB-A- 1 530 347
- GB-A- 2 225 426

## Description

The present invention relates to a method for bonding together hollow glass spheres to form a transducer.

DE-A-3431620 relates to an ultrasonic transducer comprising a piezoelectric element, a loading ring and an impedance matching member all bonded together, wherein the member consists of hollow glass balls bonded together with an epoxide material, the mass ratio of balls to epoxide being so selected that any cavities necessarily present between the balls are at least largely filled up.

DE-A-3622780 relates to a heat insulating, translucent bonding element in which the element contains hollow glass balls which are bonded together by a thin layer of a polymer adhesive in such a way that gaps remain between the balls.

GB-A-1530347 relates to a transducer comprising a layer of material, an oscillator element secured to said layer and operable to be oscillated at a resonant frequency of said element; and an annular loading element enclosing said oscillator element and secured to said layer, the thickness of said layer being equal to a quarter of the wavelength in the material of the layer corresponding to said frequency or an odd integral multiple of said quarter and the density and mass of said loading element being greater than, respectively, the density and mass of said layer.

GB-A-2225426 discloses a method for bonding together hollow glass spheres to form an acoustic matching member for a transducer.

In the method the spheres, e.g. the microspheres or bubbles, are placed in a mould to form a matrix or bed which is heated to a temperature where the glass softens and is then compressed to reduce the overall volume occupied by the spheres so that adjoining spheres bond together as by sintering. The temperature conditions and the compression conditions are so controlled as deliberately to cause the formation of voids between those sphere surfaces which have not bonded together because of the spherical shape of the spheres. It is important that a high percentage of the matrix is occupied by voids so as to produce a low acoustic impedance (3 x 10⁵ or lower) to provide acceptable acoustic coupling between a gas and the piezo element of the transducer. It is also important that bonding between adjoining spheres is substantially complete. If too many touching spheres are not bonded to their neighbours the impedance becomes unpredictable and varies with acoustic intensity.

Unfortunately with the bonding method described in GB-A-2225426 it has been found that certain spheres remain unbonded to their neighbours, particularly those in the centre of the matrix and distant from the source of compression during sintering. Furthermore it has been found that in use spheres may unbond from their neighbours.

It is therefore an object of the present invention to provide a method for making a transducer where the degree of unbonding described is reduced while the voids are retained.

According therefore to one aspect of the present invention, we provide a method of forming a transducer comprising pouring a mixture of adjoining hollow glass rigid spheres (6) and a solution of heat curable resin and a volatile organic solvent into a mould, placing a piezo element (1) on top of the mixture, subjecting the mixture to a temperature sufficient to drive off the solvent and cure the resin thereby causing the adjoining spheres (6) to bond together, the size and packing density of the spheres (6) and the concentration of the resin in the solvent being so chosen that voids (7) are otherwise left between external surfaces of the spheres (6) away from points of contact and subjecting the mixture to a compressive force to urge the element (1) towards the mixture to compress the mixture and to adhere to the mixture after curing, characterised in that the size of the spheres (6) ranges between 20 and 130µm, the packing density of the spheres (6) lies within a range of between 10 and 100% of fully close-packed, the ratio of the resin by weight to the solvent in the solution lies within the range 1:1 to 1:10 and the temperature is above the boiling point of the solvent.

Preferably the mould and the element are both cylindrical.

Suitably before the mixture is poured into the mould, a layer (5) to serve as a protective front face for the transducer is placed in the mould, the layer (5) subsequently adhering to the mixture when the resin is cured.

Conveniently, the glass is C-glass.

Preferably, the resin is an epoxy.

Suitably, the solvent is acetone.

Conveniently, the layer is a disc (5).

Preferably, the layer is a cup.

An embodiment of the invention will now be described with reference to the accompanying drawings in which:-
Figure 1 is a perspective view from the side of a transducer,
Figure 2 is a general side view,
Figure 3 is a view along lines A-A of Figure 2,
Figure 4 is an amplified view of the matching member of the transducer, and
Figure 5 is a further amplified view of the microstructure of the circled portion of the matching member of Figure 4.

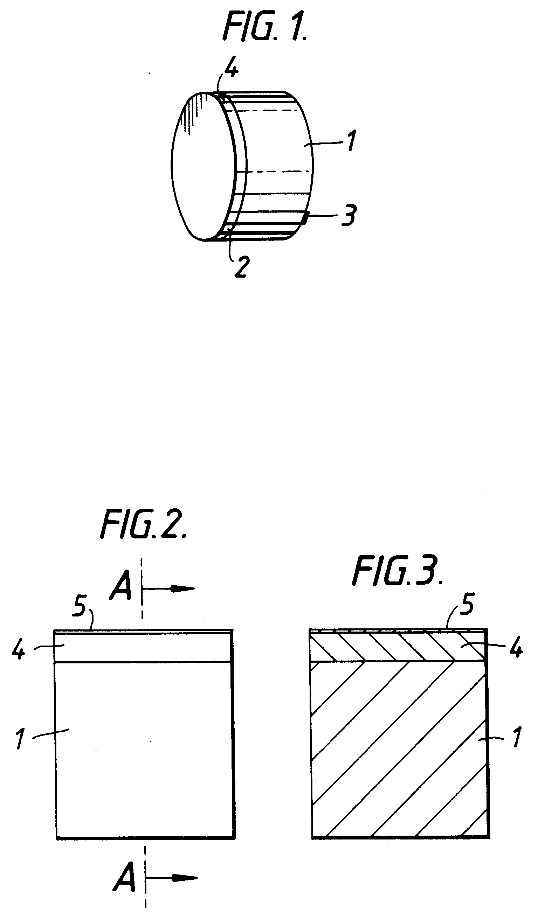

Referring to Figures 1 to 4 the transducer comprises a piezo element, for example, of type PZT4 or PZT5A, in the form of a PZT cylinder 1 with electrical connecting wires 2, 3 (Figure 1), an acoustically matching member 4 for the cylinder 1 and a protective layer for the member 4 in the form of a thin disc 5 (see Figures 2 to 4).

The matching member 4 which is in the form of a cylinder affixed to one end face of the PZT cylinder 1 has one of the wires 2 connected to its circumferential wall while the other wire 3 is connected to the other end face of cylinder 1.

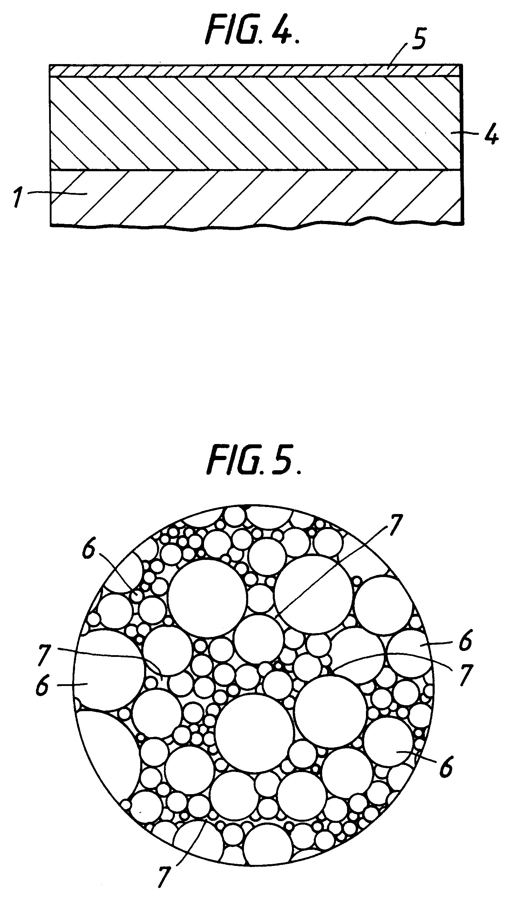

As shown in Figure 5, the matching member 3 comprises a close packed matrix of glass bubbles or microspheres 6, adjoining bubbles 6 being bonded together by a resin in the region of points of contact, while voids 7 are deliberately formed between the external surfaces of the bubbles 6.

The bubbles 6 are of the type A16/500 manufactured by 3M and known as C-glass. The bubble size ranges between 20 and 130µm, average size 60µm.

The resin is an epoxy. A typical resin is ER1040 made by Design Resins Ltd. This is a two-part high temperature curing epoxy.

The disc 5 is of polyimide (trade name Kapton) which may be 0.07mm thick. Instead of a disc a cup-shaped layer may be used to offer side as well as end protection. Instead of a plastics material a metal could be used as the protective layer if thin enough e.g. aluminium.

The transducer is manufactured in the following way. Firstly, the resin is dissolved in a suitable solvent such as acetone. The ratio of the resin by weight to the solvent in the solution lies within the range (1 to 10) to (1 to 1) for example, 1:2. The viscosity of such a solution may be little more than the viscosity of the solvent, for example in the range 0.3 to 10 centipoise.

The glass bubbles are then added to the solution to "absorb" all the solution i.e. until the final resin/solution mix is stiff with no visible liquid content. The packing density of the bubbles at this stage approaches the close-packed state.

The protective disc is then inserted through the open end of a known type cylindrical mould which may be of silicone rubber until the disc rests on the base thereof. The mould has the same internal diameter as the external diameter of the PZT cylinder.

A quantity of the bubble/solution mixture is then transferred by means of a spatula say into the mould leaving an uppermost cavity into which is next inserted the PZT cylinder.

A reasonably constant pressure is then exerted on the cylinder by means of a known spring loaded plunger to urge the cylinder towards the bubble/solution mix to compress it.

The mould is then heated to a temperature above the boiling point of the solvent in order to drive it off. In the case of acetone solvent this may be 120°C. Then the mould is heated to a temperature sufficient to cure the resin which in the case of the two-part epoxy described may be the same 120°C or up to 180°C while the pressure is still applied.

This procedure provides a transducer of the type previously described with a cylindrical matching member located between a PZT cylinder and a protective disc, both of which are affixed by the resin to the member.

## Claims

The resin causes the spheres to bond to each other at their points of contact but otherwise voids are left between the spheres.

In this way the matching member may form a ¼ wavelength acoustic coupling for the transducer if of the correct length for the PZT cylinder.

1. A method of forming a transducer comprising pouring a mixture of adjoining hollow glass rigid spheres (6) and a solution of heat curable resin and a volatile organic solvent into a mould, placing a piezo element (1) on top of the mixture, subjecting the mixture to a temperature sufficient to drive off the solvent and cure the resin thereby causing the adjoining spheres (6) to bond together, the size and packing density of the spheres (6) and the concentration of the resin in the solvent being so chosen that voids (7) are otherwise left between external surfaces of the spheres (6) away from points of contact and subjecting the mixture to a compressive force to urge the element (1) towards the mixture to compress the mixture and to adhere to the mixture after curing, characterised in that the size of the spheres (6) ranges between 20 and 130µm, the packing density of the spheres (6) lies within a range of between 10 and 100% of fully close-packed, the ratio of the resin by weight to the solvent in the solution lies within the range 1:1 to 1:10 and the temperature is above the boiling point of the solvent.

2. A method as claimed in claim 1, characterised in that the mould and the element (1) are both cylindrical.

3. A method as claimed in claim 1 or claim 2, characterised in that before the mixture is poured into the mould, a layer (5) to serve as a protective front face for the transducer is placed in the mould, the layer (5) subsequently adhering to the mixture when the resin is cured.

4. A method as claimed in any of the claims 1 to 3, characterised in that the glass if C-glass.

5. A method as claimed in any of the preceding claims, characterised in that the resin is an epoxy.

6. A method as claimed in any of the preceding claims, characterised in that the solvent is acetone.

7. A method as claimed in any of claims 3 to 6, characterised in that the layer is a disc (5).

8. A method as claimed in any of claims 4 to 7, characterised in that the layer is a cup.

## Patentansprüche

1. Verfahren zur Bildung eines Wandlers, bei dem ein Gemisch aus aneinander grenzenden hohlen starren Glaskugeln (6), einer Lösung wärmehärtbaren Harzes und eines flüchtigen organischen Lösungsmittels in eine Hohlform gegossen wird, ein Piezoelement (1) auf das Gemisch oben aufgesetzt wird, das Gemisch einer Temperatur ausgesetzt wird, die ausreicht, um das Lösungsmittel auszutreiben, und das Harz ausgehärtet wird, wodurch die aneinander grenzenden Kugeln (6) miteinander verbunden werden, wobei die Größe und Packungsdichte der Kugeln (6) und die Konzentration des Harzes im Lösungsmittel so gewählt werden, daß Hohlräume (7) zwischen den Außenoberflächen der Kugeln (6) von den Berührungspunkten weg anderweitig belassen werden, und das Gemisch einer Preßkraft ausgesetzt wird, um das Element (1) in Richtung auf das Gemisch zu drücken, das Gemisch zusammenzudrücken und nach dem Aushärten mit dem Gemisch zu verkleben, dadurch gekennzeichnet, daß die Abmessung der Kugeln (6) im Bereich zwischen 20 und 130 µm liegt, die Packungsdichte der Kugeln (6) innerhalb eines Bereiches zwischen 10 und 100 % der völlig dicht gepackten liegt, das Gewichtsverhältnis des Harzes zum Lösungsmittel in der Lösung im Bereich 1:1 bis 1:10 und die Temperatur über dem Siedepunkt des Lösungsmittels liegt.

2. Verfahren nach Anspruch 1, dadurch gekennzeichnet, daß die Hohlform und das Element (1) beide zylindrisch sind.

3. Verfahren nach Anspruch 1 oder 2, dadurch gekennzeichnet, daß vor dem Eingießen des Gemisches in die Hohlform eine Lage (5) als schützende Frontseite für den Wandler in die Hohlform eingelegt wird, wobei die Lage (5) anschließend am Gemisch haftet, wenn das Harz ausgehärtet ist.

4. Verfahren nach einem der Ansprüche 1 bis 3, dadurch gekennzeichnet, daß das Glas C-Glas ist.

5. Verfahren nach einem der vorangehenden Ansprüche, dadurch gekennzeichnet, daß das Harz ein Epoxyharz ist.

6. Verfahren nach einem der vorangehenden Ansprüche, dadurch gekennzeichnet, daß das Lösungsmittel Aceton ist.

7. Verfahren nach einem der Ansprüche 3 bis 6, dadurch gekennzeichnet, daß die Lage (5) eine Scheibe ist.

8. Verfahren nach einem der Ansprüche 4 bis 7, dadurch gekennzeichnet, daß die Lage eine Kappe ist.

## Revendications

1. Procédé de fabrication d'un transducteur, comprenant la coulée, dans un moule, d'un mélange de sphères (6) en verre, rigides, creuses et adjacentes, et d'une solution composée de résine thermodurcissable et d'un solvant organique volatil, la mise en place d'un élément piézo-électrique (1) sur le dessus du mélange, la soumission du mélange à une température suffisante pour chasser le solvant et pour durcir la résine pour ainsi provoquer la fixation entre elles des sphères (6) adjacentes, la taille et la densité de tassement des sphères (6) ainsi que la concentration de la résine dans le solvant étant choisies de telle manière que des vides (7) soient par ailleurs laissés entre des surfaces extérieures des sphères (6) à distance de points de contact, et la soumission du mélange à une force de compression afin de pousser l'élément (1) en direction du mélange pour ainsi comprimer le mélange, et le faire adhérer au mélange après durcissement, caractérisé en ce que la taille des sphères (6) est comprise dans la fourchette de 20 à 130 µm, en ce que la densité de tassement des sphères (6) se situe dans une plage allant de 10 à 100 % de l'état de tassement serré complet, en ce que le rapport en poids de la résine au solvant, dans la solution, est compris dans la fourchette de 1 : 1 à 1 : 10, et en ce que la température est supérieure au point d'ébullition du solvant.

2. Procédé selon la revendication 1, caractérisé en ce que le moule et l'élément (1) sont tous deux cylindriques.

3. Procédé selon la revendication 1 ou la revendication 2, caractérisé en ce que, avant que le mélange ne soit versé dans le moule, une couche (5), destinée à servir de face frontale de protection pour le transducteur, est placée dans le moule, la couche (5) adhérant ensuite au mélange lorsque la résine est durcie.

4. Procédé selon l'une quelconque des revendications 1 à 3, caractérisé en ce que le verre est du verre du type C.

5. Procédé selon l'une quelconque des revendications précédentes, caractérisé en ce que la résine est une résine époxy.

6. Procédé selon l'une quelconque des revendications précédentes, caractérisé en ce que le solvant est de l'acétone.

7. Procédé selon l'une quelconque des revendications 3 à 6, caractérisé en ce que la couche est un disque (5).

8. Procédé selon l'une quelconque des revendications 4 à 7, caractérisé en ce que la couche est une coupelle.
